# EUROPÄISCHE PATENTSCHRIFT

(11) **EP 1 424 544 B1**
(45) Veröffentlichungstag und Bekanntmachung des Hinweises auf die Patenterteilung: **27.05.2009**
(21) Anmeldenummer: 03025999.8
(22) Anmeldetag: 14.11.2003
(51) Int. Cl.: G01L 3/10, G01L 5/22

(54) **Vorrichtung zum Bestimmen eines auf eine Welle ausgeübten Drehmoments**
Apparatus to detect a torque acting on a shaft
Appareil pour détecter le couple de rotation d'un arbre rotatif

(30) Priorität: 28.11.2002 DE 10256321
(43) Veröffentlichungstag der Anmeldung: 02.06.2004
(73) Patentinhaber: Valeo Schalter und Sensoren GmbH, 74321 Bietigheim-Bissingen (DE)
(72) Erfinder: Jerems, Frank, Dr., 74369 Löchgau (DE); Fröhlich, Ekkehart, 74226 Nordheim (DE); Proft, Matthias, 74936 Siegelsbach (DE); Rachui, Dirk, 74321 Bietigheim-Bissingen (DE)
(74) Vertreter: Dreiss

(56) Entgegenhaltungen:
- EP-A- 1 065 473
- WO-A-02/071019
- US-A- 5 313 182
- US-A- 5 818 223

## Beschreibung

Die Erfindung betrifft eine Vorrichtung zum Bestimmen eines auf eine Welle ausgeübten Drehmoments mit den Merkmalen des Oberbegriffs des Anspruchs 1.

Aus der US-A-5,818,223 ist ein beführungsloser Drehstellungssensor bekannt, mit dem z.B. die Stellung einer Drosselklappe erfasst werden kann. Hierfür wird auf der Drehachse der Drosselklappe ein Magnet derart befestigt, dass sich dieser zusammen mit der Drosselklappe dreht. Dem Magnet liegt ein Hall-Sensor gegenüber, wobei an den beiden Sensorflächen des Hall-Sensors L-förmige Magnetflusskonzentratoren befestigt sind. Der eine Schenkel liegt an der einen Sensorfläche an und der andere Schenkel erstreckt sich parallel zur Ebene des Magnetes und orthogonal zur Drehachse. Selbst bei exakt hergestelltem Sensor mit daran befestigten Magnetflusskonzentratoren hängt die Größe des Luftspaltes zwischen den Magnetflusskonzentratoren und der Magnetoberfläche von der Einbaulage und insbesondere von der Einschubtiefe des Sensors ab.

Aus der US-A-4,984,474 ist ein Drehmomentsensor bekannt, der im wesentlichen von einem oder mehreren Magnetringen und zwei Statorelementen gebildet wird, die jedoch eine geringe Polzahl aufweisen. Die geringe Polzahl besitzt den Nachteil, dass dem vom Sensor gemessenen Signal beim Drehen der Lenkwelle eine Welligkeit aufmoduliert wird, welche nur durch geeignete elektronische Addition zweier um eine halbe Polbreite versetzter Signale beziehungsweise durch komplett ringförmig ausgebildete Flusssammelringe kompensiert werden kann. Weiterhin ist ein derart aufgebauter Drehmomentsensor relativ empfindlich und störanfällig, da der Magnetflusskonzentrator radial außerhalb der Statoren angebracht ist. Ferner weist ein derartiger Aufbau eine große Empfindlichkeit gegen Rundlauftoleranzen auf. Schließlich besitzen die Statoren Abstandshalter, die von separaten Ringen gebildet werden, wodurch der Aufbau relativ komplex wird.

Aus der US-A-5,313,182 ist eine Magnetstruktur für einen Verschiebungssensor bekannt. Bei diesem Sensor liegen mehrere Magnete an einem Magnetflusskonzentrator an. Ein Drehmoment kann aber nicht ermittelt werden.

Aus der WO-A-02/071019 ist eine Vorrichtung bekannt, bei welcher der Sensor aus einem diskret aufgebauten Multipolmagnetring und zwei ineinander geschachtelten weichmagnetischen Statoren besteht. Diese Statoren besitzen auf der radialen Innenseite fingerförmige Strukturen, welche die Magnetpole abtasten, sowie auf der radialen Außenseite einen ringförmigen Spalt, in welchem sich ein ortsfester Magnetfeldsensor befindet.

Die Polteilung muss durch diskreten Aufbau des Magnetrades relativ grob gewählt werden (Polbreite 20°), was einen ebenso großen Linearitätsbereich bewirkt, der aber nicht vollständig ausgenutzt wird, da der Bereich des zu messenden Winkels aufgrund der geforderten Steifigkeiten des Torsionssystem nur etwa ± 3° bis 5° beträgt. Der Magnetfluss kann nicht optimal ausgenutzt werden, da der den magnetischen Rückschluss bildende Luftspalt über den gesamten Umfang gleich ausgebildet ist, so dass sich der Magnetfluss auf eine große Fläche verteilt und deshalb am Ort des Magnetfeldsensors nur relativ gering ist.

Ausgehend von der WO-A-02/071019 liegt der Erfindung die Aufgabe zugrunde, einen Drehmomentsensor bereitzustellen, mit dem ohne großen technischen Aufwand ein stärkeres Signal generiert werden kann. Dabei soll der Magnetsensor jedoch robust ausgebildet und unempfindlich gegen die in Kraftfahrzeugen auftretenden Vibrationen sein.

Diese Aufgabe wird erfindungsgemäß mit einer Vorrichtung gelöst, die die Merkmale des Anspruchs 1 aufweist.

Die Anordnung des Magnetflusskonzentrators hat den wesentlichen Vorteil, dass der Magnetfeldsensor geschützt angeordnet ist. Durch den Magnetflusskonzentrator wird ein wesentlich stärkeres Signal empfangen, welches als direktes Maß für das Drehmoment verwendet werden kann, ohne dass dieses noch aufwendig ausgewertet werden müsste. Ein weiterer Vorteil besteht darin, dass der erfindungsgemäße Aufbau unempfindlich gegenüber mechanischen Toleranzen ist, da der Magnetflusskonzentrator innerhalb des Stators sich befindet.

Zwischen dem Magnetfeldsensor und jedem Magnetflussring ist also ein Magnetflusskonzentrator angeordnet ist. Dies bedeutet, dass der Magnetfluss zwischen dem Magnetflussring und dem Magnetfeldsensor stets über einen Magnetflusskonzentrator läuft.

Dabei weist der Magnetflusskonzentrator einen dem Magnetflussring benachbarten und einen dem Magnetfeldsensor benachbarten Abschnitt auf. Auf diese Weise kann sich der Magnetflusskonzentrator sowohl bis in die unmittelbare Nähe des Magnetflussringes als auch bis in die unmittelbare Nähe des Magnetfeldsensors erstrecken.

Weiterhin sind dabei die Abschnitte in zueinander versetzten Ebenen oder Flächen angeordnet. Auf diese Weise wird der Magnetfluss optimal von den Magnetflussringen in Richtung des Magnetfeldsensors gelenkt und geleitet. Dabei sind die beiden Abschnitte über eine Abkröpfung miteinander verbunden.

Um eine optimale Verstärkung des Signals zu erhalten, erstreckt sich der Magnetflusskonzentrator benachbart zum Magnetflussring über einen Abschnitt in dessen Umfangsrichtung. Dabei ist der Magnetflusskonzentrator vorteilhaft der Krümmung des Magnetflussringes angepasst. Um den Widerstand im den Rückschluss bildenden Luftspalt so gering wie möglich zu halten, ist zwischen dem Magnetflusskonzentrator und dem Magnetflussring ein sehr enger Luftspalt vorhanden. Dabei ist von Vorteil, dass der Magnetfeldsensor berührungslos arbeitet und dennoch einen geringen Widerstand im Rückschluss besitzt.

Bei einem Ausführungsbeispiel verläuft der Luftspalt in einer in Umfangsrichtung sich erstreckenden Fläche. Bei einem anderen Ausführungsbeispiel verläuft der Luftspalt in einer in radialer Richtung sich erstreckenden Fläche, das heißt in einer Radialebene. Im ersteren Fall ist der Magnetfeldsensor axial und im zweiten Ausführungsbeispiel radial in den Stator eingesetzt.

Um eine optimale Ausnutzung des gesamten Feldes, und zwar hinsichtlich der Feldstärke, des Winkelmessbereichs, der Polzahl und so weiter zu erhalten, ist der den Magnetflussring benachbarte Abschnitt breiter als die Breite eines Fingers, insbesondere ist dieser doppelt so breit. Für eine Redundanz sind mindestens zwei unabhängige Magnetfeldsensoren vorgesehen. Die Flusskonzentratoren haben dann zwei Abkröpfungen. Der Flusskonzentrator ist in einer bestimmten Länge ausgeführt, um eine größere Empfindlichkeit zu erhalten und um eine eventuelle Signalwelligkeit auszumitteln.

Eine einfache Montage und exakte Zuordnung zueinander wird dadurch erzielt, dass der beziehungsweise die Magnetflusskonzentrator(en) und der Magnetfeldsensor in einem gemeinsamen Halter und/oder Sensorgehäuse angeordnet sind. Über diesen Halter werden sowohl der Magnetfeldsensor als auch die Magnetflusskonzentratoren zueinander positioniert und innerhalb des Stators fixiert und zudem gegen Umwelteinflüsse geschützt.

Weitere Vorteile, Merkmale und Einzelheiten der Erfindung ergeben sich aus den Unteransprüchen sowie der nachfolgenden Beschreibung, in der unter Bezugnahme auf die Zeichnung zwei besonders bevorzugte Ausführungsbeispiele im einzelnen beschrieben sind. Dabei können die in der Zeichnung dargestellten als auch in den Ansprüchen und in der Beschreibung erwähnten Merkmale jeweils einzeln für sich oder in beliebiger Kombination erfindungswesentlich sein.

In der Zeichnung zeigen:
- Figur 1: eine perspektivische Darstellung des erfindungsgemäßen, an einer Welle angeordneten Drehmomentsensors, teilweise geschnitten;
- Figur 2: eine Schnittansicht in Richtung des Pfeils II gemäß Figur 1;
- Figur 3: eine schematische Darstellung der Relativpositionen von Magnetring und Stator ohne an der Welle wirkendem Drehmoment (Figur 3a) und bei aufgebrachtem Drehmoment (Figur 3b);
- Figur 4: einen Längsschnitt durch eine zweite Ausführungsform des erfindungsgemäßen Drehmomentsensors;
- Figur 5: eine vergrößerte Wiedergabe des Ausschnitts V gemäß Figur 4;
- Figur 6: einen Schnitt VI-VI gemäß Figur 5;
- Figur 7: einen Schnitt VII-VII gemäß Figur 5; und
- Figur 8: eine schematische Darstellung der Relativpositionen von Magnetring und Stator ohne an der Welle wirkendem Drehmoment (Figur 8a) und bei aufgebrachtem Drehmoment (Figur 8b).

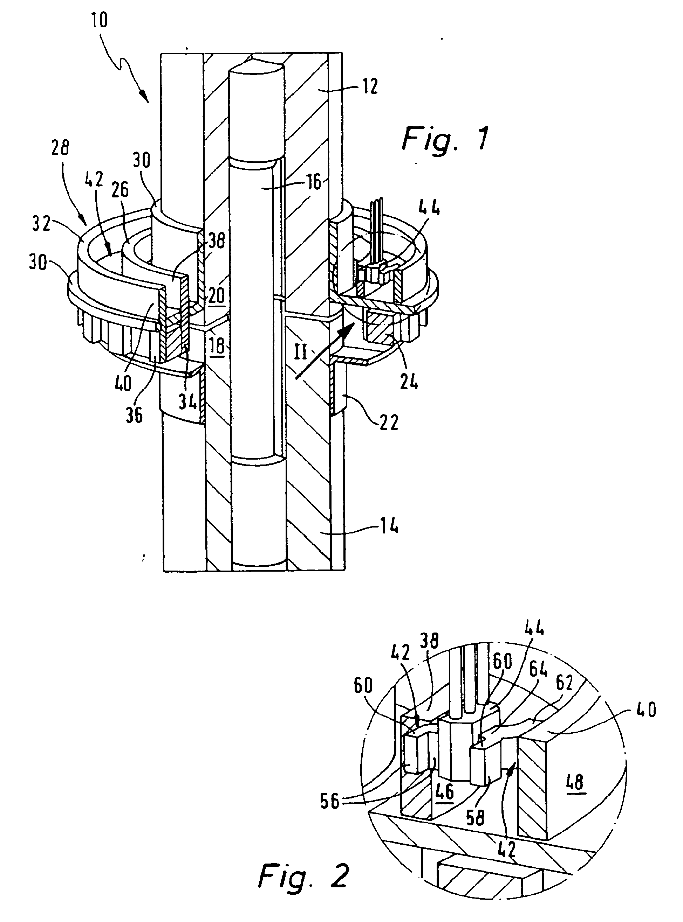

Die Figur 1 zeigt eine insgesamt mit 10 bezeichnete Lenkwelle eines Kraftfahrzeugs, von der zwei Wellenabschnitte 12 und 14 erkennbar sind. Die beiden Wellenabschnitte 12 und 14 sind über eine Torsionsstabfeder 16 miteinander verbunden, so dass ihre freien, einander zugewandten Enden 18 und 20 dann relativ zueinander verdreht werden, wenn auf die Lenkwelle 10 ein Drehmoment aufgebracht wird. Am Ende 18 des Wellenabschnitts 14 ist ein Magnetringhalter 22 befestigt, welcher einen insgesamt mit 24 bezeichneten Mulipol-Magnetring trägt. Dieser Magnetring 24 umgibt die Lenkwelle 10 mit radialem Abstand, so dass zwischen dem Magnetring 24 und der Lenkwelle 10 ein Statorelement 26 eingreifen kann.

Dieses Statorelement 26 ist Teil eines insgesamt mit 28 bezeichneten Stators, der an einem Statorhalter 30 befestigt ist. Dieser Statorhalter 30 ist wiederum am freien Ende 20 des Wellenabschnitts 12 angebracht. Dem ersten Statorelement 26 liegt ein zweites Statorelement 32 radial gegenüber und wird, wie das erste Statorelement 26, vom Statorhalter 30 gehalten und sicher positioniert. Von beiden Statorelementen 26 und 32 ragen nach unten Finger 34 und 36 ab, die zwischen sich den Magnetring 24 aufnehmen. Die beiden Statorelemente 26 und 32 sind aus weichmagnetischem Material gefertigt.

Ferner ist in der Figur 1 erkennbar, dass die freien oberen Enden 38 und 40 der beiden Statorelemente 26 und 32 einen Spalt 42 bilden. In diesem Spalt 42 ist ein Magnetfeldsensor 44 angeordnet, und liegt den beiden Enden 38 und 40 direkt gegenüber, was aus Figur 2 deutlich erkennbar ist. Die Finger 34 und 36 ragen jeweils von einem Magnetflussring 46 und 48 ab, die den in den Fingern 34 und 36 jeweils induzierten Magnetfluss zusammenführen und in Richtung des Magnetfeldsensors 44 leiten.

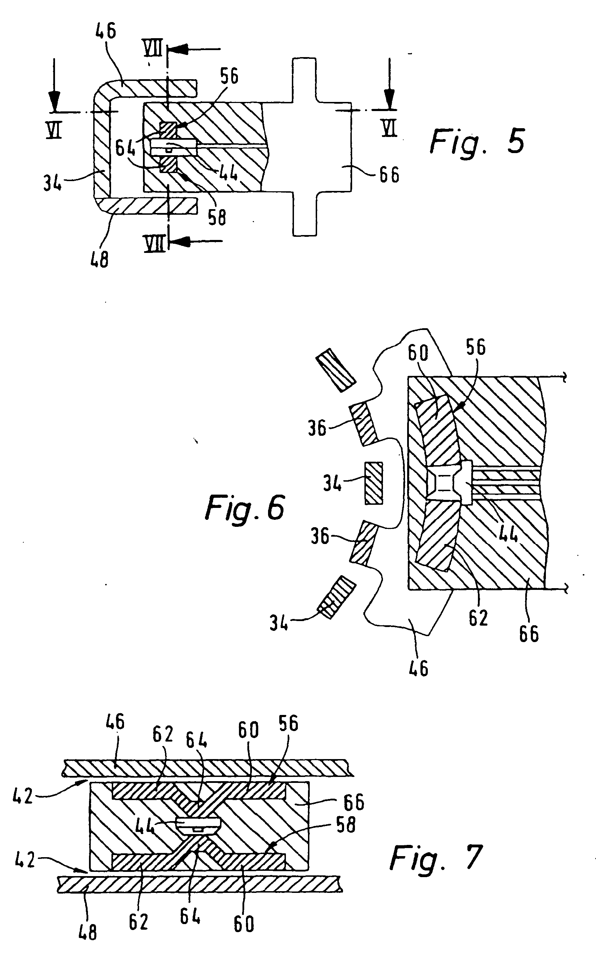

Aus der Figur 2 ist deutlich erkennbar, dass am Magnetfeldsensor 44 ein erster Magnetflusskonzentrator 56 angeordnet ist, der zwischen dem Magnetfeldsensor 44 und dem Magnetflussring 46 liegt. Zwischen dem Magnetfeldsensor 44 und dem Magnetflussring 48 ist ein zweiter Magnetflusskonzentrator 58 angeordnet. Die beiden Magnetflusskonzentratoren 56 und 58 weisen jeweils einen Abschnitt 60 und 62 auf, die den Magnetflussringen 46 und 48 benachbart sind. Zwischen den beiden Abschnitten 60 und 62 befindet sich jeweils ein Abschnitt 64, der dem Magnetfeldsensor 44 benachbart ist. Die Abschnitte 60 und 62 gehen über eine Abkröpfung jeweils in den Abschnitt 64 über. Bei Herstellung der Flusskonzentratoren 56 und 58 als Sinterteile ist der mittlere Abschnitt 64 nicht abgekröpft, sondern die dem Magnetflussring 46 und 48 zugewandte Abschnitte 60 und 62 sind durchgehend ausgebildet, und nur auf der dem Magnetfeldsensor 44 zugewandten Seite befindet sich dann ein Höcker, der den Abschnitt 64 bildet. Benachbart zu den Abschnitten 60 und 62 befindet sich ein geringer Luftspalt 42, der diese von den Magnetflussringen 46 und 48 trennt, was deutlich zum zweiten Ausführungsbeispiel in Figur 7 dargestellt ist. Die beiden Magnetflusskonzentratoren 56 und 58 und der Magnetfeldsensor 44 sind in einem gemeinsamen Gehäuse angeordnet und können in axialer Richtung zwischen die beiden Magnetflussringe 46 und 48 in den Stator 28 eingeschoben werden.

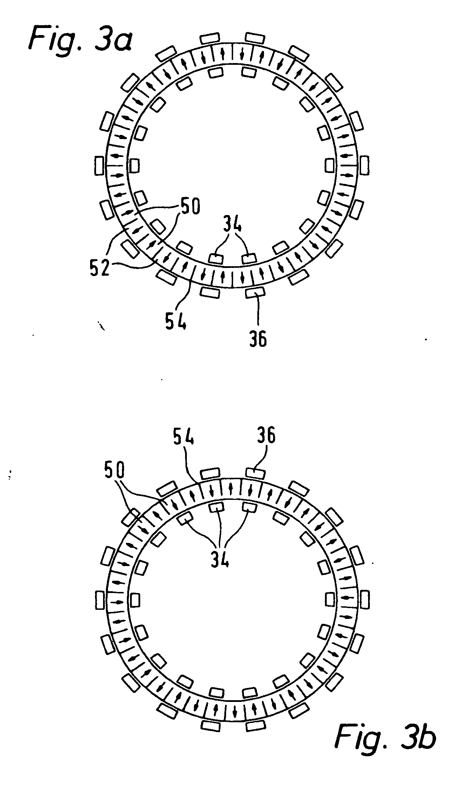

Den Figuren 3a und 3b kann die Stellung der einzelnen Finger 34 und 36 bezüglich der Pole 50 und 52 des Magnetringes 24 entnommen werden. Außerdem ist ersichtlich, dass die Finger 34 und 36 einander radial gegenüberliegen.

In der Figur 3a wird auf die Lenkwelle 10 kein Drehmoment aufgebracht, so dass die Figur 3a den Ruhe- oder Neutralzustand zeigt. Dabei ist deutlich erkennbar, dass die Finger 34 und 36 jeweils den Übergängen 54 zwischen den Polen 50 und 52 gegenüberliegen. Aus Symmetriegründen bleiben die Statorelemente 26 und 32 insgesamt magnetisch neutral; das heißt im Luftspalt 42 bildet sich deshalb kein Magnetfeld aus.

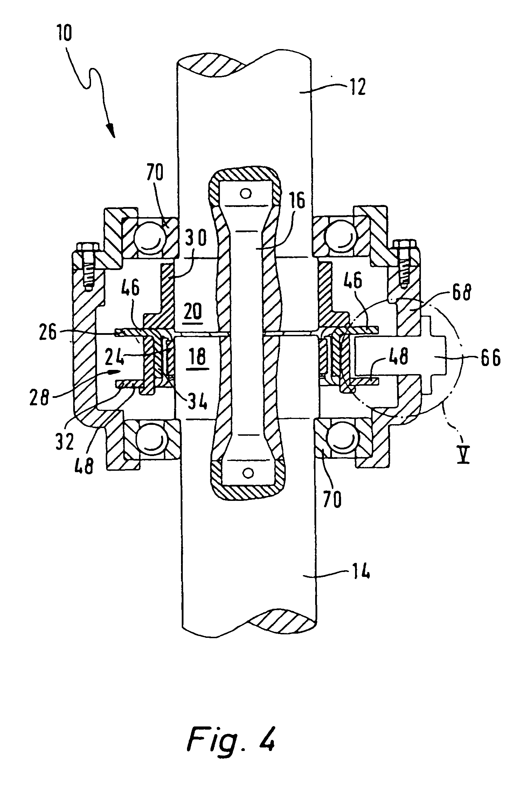

Wird auf die Lenkwelle 10 ein Drehmoment ausgeübt, dann verdrehen sich die beiden Enden 18 und 20 der beiden Wellenabschnitte 12 und 14 gegeneinander, was in Figur 3b dargestellt ist. Die Finger 34 und 36 liegen nunmehr einem der Pole 50 und 52 gegenüber (in der Figur 3b dem Pol 50). Die radial inneren Finger 34 liegen zum Beispiel den Nordpolen und die radial äußeren Finger 36 den Südpolen gegenüber. Folglich wird das innere Statorelement 26 zu einem Nordpol und das äußere Statorelement 32 zu einem Südpol aufmagnetisiert. Der durch die Enden 38 und 40 begrenzte Spalt 42, welcher über den gesamten Umfang ausgebildet ist, stellt den magnetischen Rückschluss dar. Der Magnetfeldsensor 44, welcher ortsfest am z.B. in Figur 4 dargestellten Gehäuse 68 der Lenkwelle 10 angebracht ist, taucht mit seiner empfindlichen Fläche in diesen Spalt 42 ein und misst über die Magentflusskonzentratoren 56 und 58 die Stärke der magnetischen Induktion, welche ein direktes Maß für die Größe des Drehmoments ist. Die Stärke der magnetischen Induktion ist dabei bei konstantem Drehmoment ebenfalls über den gesamten Umfang des Spalts 42 konstant. Dies bedeutet, dass die Lenkwelle 10 mit dem Magnetring 24 und dem Stator 28 ungehindert gedreht werden kann. Der Sensor 44 arbeitet vollkommen berührungslos.

Bei negativem Drehmoment ändert sich die Richtung der relativen Verdrehung, so dass die Finger 34 den Polen 52 gegenüberliegen. Dadurch vertauschen sich die Polaritäten in den Statorelementen 26 und 32.

Von Vorteil ist, dass die Polteilung des Magnetringes 24 relativ fein gewählt werden kann, so dass der Linearitätsbereich sich nahezu mit dem zu messenden Winkelbereichen deckt. Es ergibt sich dadurch bei gleichem Drehmoment, verglichen mit dem Stand der Technik, ein größeres Ausgangssignal, was gleichbedeutend mit einem besseren Signal/Rauschverhältnis ist. Da der Magnetring aus einem kunststoffgebundenen Magnetmaterial hergestellt ist, kann dieser preisgünstiger und genauer gefertigt werden. Durch den im Verhältnis zum Luftspalt 42 großen Abstand der Finger 34 und 36 ist kein konkurrierender Nebenschluss vorhanden und die Magnetfeldlinien konzentrieren sich optimal auf die Magentflusskonzentratoren 56 und 58. Hierdurch wird das Ausgangssignal ebenfalls vergrößert. Da der Magnetfeldsensor 44 in axialer Richtung im Spalt 42 angeordnet ist, wird die Montage erleichtert, da der Magnetfeldsensor 44 direkt an einem Halter befestigt werden kann, welcher in axialer Richtung auf die Welle 10 aufgeschoben wird und von dieser zentriert wird. Dadurch entstehen geringe Montagetoleranzen.

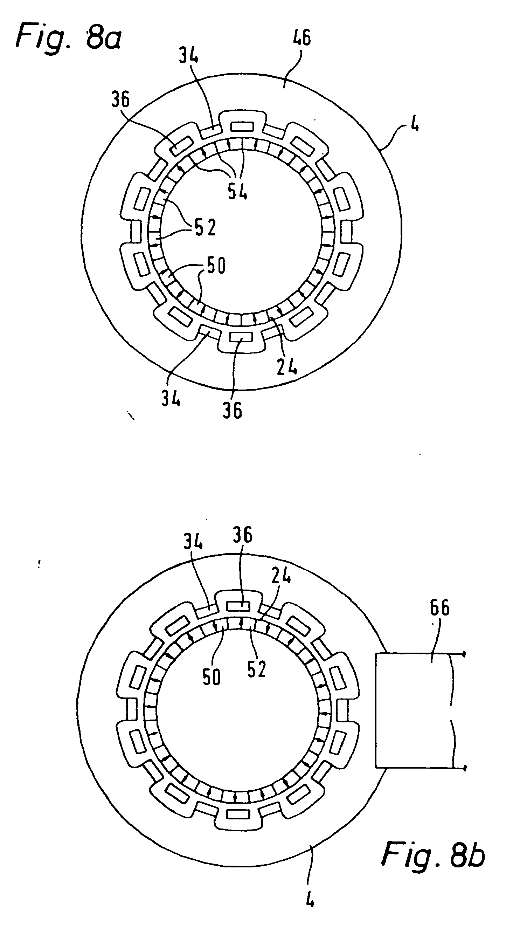

Die Figur 4 zeigt einen Längsschnitt durch eine zweite Ausführungsform der Erfindung, wobei gleiche oder gleichwirkende Bauteile mit gleichen Bezugszeichen bezeichnet sind. Am Ende 18 des Wellenabschnitts 14 ist der Magnetring 24 befestigt, der vom Stator 28 umgeben ist. Dieser Stator 28 ist seinerseits über den Statorhalter 30 am Ende 20 des Wellenabschnitts 12 befestigt. Der Aufbau des Stators 28 entspricht im Wesentlichen dem, wie er in der FR 2,821,668 A1 beschrieben ist, so dass der Stator 28 zwei Statorelemente 26 und 32 besitzt. Diese Statorelemente 26 und 32 sind im wesentlichen L-förmig abgewinkelt, wobei der eine L-Schenkel vom Magnetflussring 46 beziehungsweise 48 und der andere L-Schenkel von den Fingern 34 beziehungsweise 36 gebildet werden. Die Finger 34 und 36 sind zum Beispiel in den Figuren 6 und 8 gezeigt.

Zwischen den beiden Magnetflussringen 46 und 48 ist, wie deutlich in Figur 5 gezeigt, der Magnetfeldsensor 44 angeordnet, der seinerseits im Sensorgehäuse 66 untergebracht ist. Neben dem Magnetfeldsensor 44 befinden sich die beiden Magnetflusskonzentratoren 56 und 58, die mit ihrem Abschnitt 64 direkt am Magnetfeldsensor 44 anliegen.

Die Figur 6 zeigt den Magnetflusskonzentrator 56 im Längsschnitt und es ist erkennbar, dass der Abschnitt 64 in die beiden Abschnitte 60 und 62 übergeht. Insgesamt ist der Magnetflusskonzentrator 56 gebogen ausgeführt und folgt der Krümmung des Magnetflussringes 46. Außerdem ist erkennbar, dass die beiden Abschnitte 60 und 62 im wesentlichen zwei Finger 36 des Magnetflussringes 46 überdecken, wodurch der Magnetfluss, der in diesen beiden Fingern 36 induziert wird, konzentriert und dem Magnetfeldsensor 44 zugeführt wird.

Der Flusskonzentrator 56 bzw. 58 kann auch gerade ausgeführt werden. Die Länge ist nicht mit der Zahl der überdeckten Finger 34 bzw. 36 korreliert. Der von den Fingern 34 und 36 gesammelte Fluss wird durch die Magnetflussringe 46 und 48 über den Umfang verteilt und die Flusskonzentratoren 56 und 58 leiten den Fluss gezielt über den Magnetfeldsensor 44 zurück.

Die Ausgestaltung der beiden Magnetflusskonzentratoren 56 und 58 ist deutlich aus der Figur 7 erkennbar, insbesondere der Verlauf der Abschnitte 60, 62 und 64, und es ist deutlich erkennbar, dass die Abschnitte 64 am Magnetfeldsensor 44 anliegen und die Abschnitte 60 und 62 unmittelbar den Magnetflussringen 46 und 48 benachbart sind, wobei zwischen den Abschnitten 60 und 62 sowie den Magnetflussringen 46 und 48 lediglich ein geringer Luftspalt 42 vorherrscht.

In der Figur 8a ist, wie in der Figur 3a, die Neutralstellung gezeigt, in welcher kein Drehmoment auf die Lenkwelle 10 aufgebracht wird. In dieser Position stehen die einzelnen Finger 34 und 36 genau mittig den jeweiligen Übergängen 54 zwischen den Polen 50 und 52 gegenüber. Aus Symmetriegründen bleiben die Statorelemente 26 und 32 und somit auch die Magnetflussringe 46 und 48 magnetisch neutral. Das heißt im Luftspalt 42 bildet sich kein Magnetfeld aus.

In der Figur 8b wird auf die Lenkwelle 10 ein Drehmoment ausgeübt, so dass sich der Magnetring 24 und der Stator 28 relativ zueinander verdrehen. Die Finger 34 und 36 liegen nun den Südpolen 50 beziehungsweise den Nordpolen 52 gegenüber. In den Statorelementen 26 und 32 wird nun ein Magnetfluss induziert, der über die Magnetflussringe 46 und 48 und die Magnetflusskonzentratoren 56 und 58 auf den Magnetfeldsensor 44 übertragen wird. Es werden die gleichen Vorteile erzielt, wie beim ersten Ausführungsbeispiel. Die Montage des Magnetfeldsensors 44 zusammen mit seinem Sensorgehäuse 66 erfolgt in radialer Richtung, was aus Figur 4 ersichtlich ist. Dieses Sensorgehäuse 66 wird von einem Gehäuse 68 fixiert, wobei die Lenkwelle 10 über Drehlager 70 vom Gehäuse 68 abgekoppelt ist.

Auch bei dieser Ausführungsform ist der Magnetfeldsensor 44 geschützt angeordnet und einfach montierbar, wobei aufgrund der Magnetflusskonzentratoren 56 und 58 das Signal keine Welligkeit aufweist. Das vom Magnetfeldsensor 44 erzeugte Signal entspricht direkt dem aufgebrachten Drehmoment.

## Patentansprüche

1. Vorrichtung zum Bestimmen eines auf eine Welle (10) ausgeübten Drehmoments, wobei die Welle (10) einen ersten Wellenabschnitt (14) und einen zweiten Wellenabschnitt (12) aufweist und die beiden Wellenabschnitte (12 und 14) gegeneinander verdrehbar sind, mit einem den ersten Wellenabschnitt (14) umgebenden und mit diesem verbundenen Multipol-Magnetring (24) und einem am zweiten Wellenabschnitt (12) befestigten Statorhalter (30), wobei am Statorhalter (30) zwei Statorelemente (26, 32) befestigt sind und jedes Statorelement (26, 32) in axialer Richtung abragende Finger (34, 36) aufweist, die gleichmäßig zumindest über einen Teil des Umfangs verteilt angeordnet sind und zwischen sich Lücken aufweisen, wobei die Finger (34, 36) eines jeden Statorelements (26, 32) über einen Magnetflussring (46, 48) miteinander verbunden sind, die Magnetflussringe (46, 48) einen Abstand zueinander aufweisen und zwischen den Magnetflussringen (46, 48) ein Magnetfeldsensor (44) angeordnet ist, wobei dem Magnetfeldsensor (44) zwei Magnetflusskonzentratoren (56, 58) zugeordnet sind, **dadurch gekennzeichnet, dass** die Magentflusskonzentratoren (56, 58) zwischen den Magnetflussringen (46, 48) vorgesehen und am Magnetfeldsensor (44) angeordnet sind, wobei die Magnetflusskonzentratoren (56, 58) jeweils einen Abschnitt (60, 62) aufweisen, die den Magnetflussringen (46, 48) benachbart sind und zwischen den beiden Abschnitten (60, 62) sich jeweils ein Abschnitt (64) befindet, der dem Magnetfeldsensor (44) benachbart ist und die dem Magnetflussring (46, 48) benachbarten Abschnitte (60, 62) breiter sind als die Breite eines Fingers (34, 36) und in zueinander versetzten Ebenen oder Flächen angeordnet sind.

2. Vorrichtung nach Anspruch 1, **dadurch gekennzeichnet, dass** der Magnetflusskonzentrator (56, 58) sich benachbart zum Magnetflussring (46, 48) über einen Abschnitt dessen Umfangs erstreckt.

3. Vorrichtung nach einem der vorhergehenden Ansprüche, **dadurch gekennzeichnet, dass** der Magnetflusskonzentrator (56, 58) der Krümmung des Magnetflussringes (46, 48) angepasst ist.

4. Vorrichtung nach einem der vorhergehenden Ansprüche, **dadurch gekennzeichnet, dass** zwischen dem Magnetflusskonzentrator (56, 58) und dem Magnetflussring (46, 48) ein Luftspalt (42) vorhanden ist.

5. Vorrichtung nach Anspruch 4, **dadurch gekennzeichnet, dass** der Luftspalt (42) in einer in Umfangsrichtung sich erstreckenden Fläche verläuft.

6. Vorrichtung nach Anspruch 4, **dadurch gekennzeichnet, dass** der Luftspalt (42) in einer in radialer Richtung sich erstreckenden Fläche (Radialebene) verläuft.

7. Vorrichtung nach einem der vorhergehenden Ansprüche, **dadurch gekennzeichnet, dass** die Abschnitte (60, 62, 64) über eine Abkröpfung ineinander übergehen.

8. Vorrichtung nach einem der vorhergehenden Ansprüche, **dadurch gekennzeichnet, dass** die dem Magnetflussring (46, 48) benachbarten Abschnitte (60, 62) doppelt so breit sind als die Breite eines Fingers (34, 36).

9. Vorrichtung nach einem der vorhergehenden Ansprüche, **dadurch gekennzeichnet, dass** der beziehungsweise die Magnetflusskonzentrator(en) (56, 58) und der Magnetfeldsensor (44) in einem gemeinsamen Halter (68) und/oder Sensorgehäuse (66) angeordnet sind.

10. Vorrichtung nach einem der vorhergehenden Ansprüche, **dadurch gekennzeichnet, dass** der Magnetflusskonzentrator (56, 58) sich über wenigstens eine Fläche erstreckt, die der Breite von zwei einander benachbarten Fingern (34, 36) eines Statorelements (26, 32) entspricht.

## Claims

1. An apparatus for determining the torque applied to a shaft (10), wherein the shaft (10) has a first shaft section (14) and a second shaft section (12), and the two shaft sections (12 and 14) can be rotated in relation to each other, having a multi- pole magnetic ring (24), which encloses and is connected with the first shaft section (14), and a stator holder (30) fastened on the second shaft section (12), wherein two stator elements (26, 32) are fastened on the stator holder (30) and each stator element (26, 32) has fingers (34, 36), which project away in the axial direction and are arranged, evenly distributed, over at least a portion of the circumference and have gaps between them, wherein the fingers (34, 36) of each stator element (26, 32) are connected with each other via a magnetic flux ring (46, 48), the magnetic flux rings (46, 48) are spaced apart from each other, and a magnetic field sensor (44) is arranged between the magnetic flux rings (46, 48), and wherein two magnetic flux concentrators (56, 58) are assigned to the magnetic field sensor (44), **characterized in that** the magnetic flux concentrators (56, 58) are provided between the magnetic flux rings (46, 48) and are arranged on the magnetic field sensor (44), wherein the magnetic flux concentrators (56, 58) respectively have a section (60, 62), which adjoins the magnetic flux rings (46, 48), and a section (64) is respectively located between the two sections (60, 62) which adjoins the magnetic field sensor (44), and the sections (60, 62) adjoining the magnetic flux ring (46, 48) are wider than the width of a finger (34, 36) and are arranged in planes or on surfaces which are offset in respect to each other.

2. The apparatus in accordance with claim 1, **characterized in that,** next to the magnetic flux ring (46, 48), the magnetic flux concentrator (56, 58) extends over a section of the circumference of the latter.

3. The apparatus in accordance with one of the preceding claims, **characterized in that** the magnetic flux concentrator (56, 58) is matched to the curvature of the magnetic flux ring (46, 48).

4. The apparatus in accordance with one of the preceding claims, **characterized in that** an air gap (42) is provided between the magnetic flux concentrator (56, 58) and the magnetic flux ring (46, 48).

5. The apparatus in accordance with claim 4, **characterized in that** the air gap (42) extends in a surface which extends in the circumferential direction.

6. The apparatus in accordance with claim 4, **characterized in that** the air gap (42) extends in a surface (radial plane) which extends in the radial direction.

7. The apparatus in accordance with one of the preceding claims, **characterized in that** the sections (60, 62, 64) make a transition into each other via a right-angled bend.

8. The apparatus in accordance with one of the preceding claims, **characterized in that** the sections (60, 62) adjoining the magnetic flux ring (46, 48) are twice as wide as the width of a finger (34, 36).

9. The apparatus in accordance with one of the preceding claims, **characterized in that** the magnetic flux concentrator(s) (56, 58) and the magnetic field sensor (44) is/are arranged in a common holder (68) and/or sensor housing (66).

10. The apparatus in accordance with one of the preceding claims, **characterized in that** the magnetic flux generator (56, 58) extends at least over a surface which corresponds to the width of two adjoining fingers (34, 36) of a stator element (26, 32).

## Revendications

1. Dispositif pour déterminer un couple de rotation exercé sur un arbre (10), dans lequel l'arbre (10) présente un premier segment d'arbre (14) et un deuxième segment d'arbre (12), et les deux segments peuvent être tournés l'un par rapport à l'autre (12 et 14), avec un anneau magnétique multipolaire (24) entourant le premier segment d'arbre (14) et relié à celui-ci et avec un support de stator (30) fixé au deuxième segment d'arbre (12), dans lequel deux éléments de stator (26, 32) sont fixés au support de stator (30) et chaque élément de stator (26, 32) présente des doigts (34, 36) dépassant dans la direction axiale, qui sont disposés en étant répartis de façon homogène au moins sur une partie de la circonférence et présentent des espaces entre ceux-ci, dans lequel les doigts (34, 36) de chaque élément de stator (26, 32) sont reliés ensemble par l'intermédiaire d'un anneau à flux magnétique (46, 48), les anneaux à flux magnétique (46, 48) présentent un espacement les uns par rapport aux autres, et un capteur de champ magnétique (44) est disposé entre les anneaux à flux magnétique (46, 48), dans lequel deux concentrateurs de flux magnétique (56, 58) sont associés au capteur de champ magnétique (44), **caractérisé en ce que** les concentrateurs de flux magnétique (56, 58) sont prévus entre les anneaux à flux magnétique (46, 48) et sont disposés sur le capteur de flux magnétique (44), dans lequel les concentrateurs de flux magnétique (56, 58) présentent respectivement un segment (60, 62) qui est adjacent aux anneaux à flux magnétique (46, 48) et entre les deux segments (60, 62), respectivement un segment (64) est situé qui est adjacent au capteur de champ magnétique (44), et les segments (60, 62) adjacents à l'anneau à flux magnétique (46, 48) sont plus larges que la largeur d'un doigt (34, 36) et sont disposés dans des plans ou surfaces décalés les uns par rapport aux autres.

2. Dispositif selon la revendication 1, **caractérisé en ce que** le concentrateur de flux magnétique (56, 58) s'étend de façon adjacente à l'anneau à flux magnétique (46, 48) sur un segment de la circonférence de celui-ci.

3. Dispositif selon l'une quelconque des revendications précédentes, **caractérisé en ce que** le concentrateur de flux magnétique (56, 58) est adapté à la courbure de l'anneau à flux magnétique (46, 48).

4. Dispositif selon l'une quelconque des revendications précédentes, **caractérisé en ce qu'**entre le concentrateur de flux magnétique (56, 58) et l'anneau à flux magnétique (46, 48), il existe un entrefer (42).

5. Dispositif selon la revendication 4, **caractérisé en ce que** l'entrefer (42) s'étend dans une surface s'étendant dans la direction circonférentielle.

6. Dispositif selon la revendication 4, **caractérisé en ce que** l'entrefer (42) s'étend dans une surface s'étendant dans la direction radiale (plan radial).

7. Dispositif selon l'une quelconque des revendications précédentes, **caractérisé en ce que** les segments (60, 62, 64) passent les uns aux autres par l'intermédiaire d'un coude.

8. Dispositif selon l'une quelconque des revendications précédentes, **caractérisé en ce que** les segments (60, 62) adjacents à l'anneau à flux magnétique (46, 48) sont deux fois plus larges que la largeur d'un doigt (34, 36).

9. Dispositif selon l'une quelconque des revendications précédentes, **caractérisé en ce que** le ou les concentrateurs de flux magnétique (56, 58) et le capteur de champ magnétique (44) sont disposés dans un support (68) et/ou un boîtier de capteur (66) commun(s).

10. Dispositif selon l'une quelconque des revendications précédentes, **caractérisé en ce que** le concentrateur de flux magnétique (56, 58) s'étend sur au moins une surface qui correspond à la largeur de deux doigts (34, 36) adjacents d'un élément de stator (26, 32).
